Europäisches Patentamt

European Patent Office

Office européen des brevets

(11) Publication number: **0 042 744**
**B1**

(19)

# (12) EUROPEAN PATENT SPECIFICATION

(45) Date of publication of patent specification: **27.03.85**

(51) Int. Cl.⁴: **B 23 P 15/00** // B23K20/00

(21) Application number: **81302776.0**

(22) Date of filing: **19.06.81**

(54) **Dual alloy turbine wheel.**

(30) Priority: **23.06.80 US 162332**

(43) Date of publication of application:
**30.12.81 Bulletin 81/52**

(45) Publication of the grant of the patent:
**27.03.85 Bulletin 85/13**

(84) Designated Contracting States:
**DE FR GB IT NL SE**

(56) References cited:
**DE-A-2 648 007**
**DE-A-2 824 369**
**FR-A-2 317 502**
**GB-A-2 028 180**
**US-A-1 470 505**
**US-A-3 590 454**
**US-A-3 940 268**
**US-A-4 096 615**

(73) Proprietor: **THE GARRETT CORPORATION**
**9851-9951 Sepulveda Boulevard P.O. Box 92248**
**Los Angeles, California 90009 (US)**

(72) Inventor: **Hoppin, George S., III**
**5144 North 69th Place**
**Phoenix Arizona (US)**
Inventor: **Curbishley, George**
**644 North Date Street**
**Mesa Arizona 85201 (US)**

(74) Representative: **Arthur, George Fitzgerald et al**
**KILBURN & STRODE 30, John Street**
**London WC1N 2DD (GB)**

Courier Press, Leamington Spa, England.

## Description

Dual alloy turbine wheels or dual-property turbine disc have some limited use at the present time and are extremely attractive for future use in high performance commercial aircraft engine design. Single alloy turbine discs which are used predominantly in current technology commercial aircraft engines, are forged from vacuum melted ingots or are consolidated by various means from pre-alloyed powders. Such a single alloy must satisfy requirements in both the hub and the rim areas of the turbine disc which requirements are sometimes in conflict. The two extremes in single-alloy turbine engine discs today are the forged disc used in commercial and general aviation turbofan engines and the cast integral turbine wheel typically used in small turbo-prop/turbo-shaft engines and auxiliary power units. The forged alloys used today will typically have superior tensile and low cycle fatigue (LCF) properties, but quite limited creep rupture strength while the cast wheel alloys will have the reversed properties, i.e. excellent creep rupture strength but relatively poor tensile and LCF properties. Modern turbofan engines, developing a thrust from 3,000 to 55,000 pounds (1350 to 24750Kg) and having cooled separately bladed turbine discs require a turbine disc hub having maximised tensile strength in order to provide a satisfactory burst margin. The hub area must also have maximised resistance to low cycle fatigue (LCF) cracking and crack propagation in order to ensure long turbine disc life. The hub area must also have good notch ductility to minimise the harmful effects of stress concentrations, either inherent in the design or induced by undetected flaws in critical regions. In general, all the desirable qualities for disc hubs are associated with tough, fine-grained, highly-alloyed materials. In contrast to the hub, tensile stress levels are lower in the ring or rim of a well designed turbine disc, but operating temperatures are higher and creep resistance becomes an important consideration. With the current single alloy disc design philosophy, used for modern commercial aircraft and general aviation engines, the material is chosen primarily to satisfy hub requirements and sufficient cooling air is supplied to the rim to lower its temperature to the level, typically about 600—700°C where creep strength of the material is not limiting. If temperatures and stresses rise to levels where creep strength becomes limiting in the rims, large-grained alloys with adequate creep-resistance are employed, but the wheel size and weight are increased, since the large-grained creep-resistance micro structures have inferior tensile properties to fine-grained material.

Hence, from the above, it is readily apparent that a dual property turbine disc becomes quite attractive as optimum properties in each area of the disc will allow the cooling air requirements for the disc to be minimised or eliminated, with resulting improvement in engine-operating efficiency. In addition, lighter weight turbine discs, would be possible with a favourable impact on total aircraft performance.

A dual alloy turbine disc which provides optimum properties for both the rim and the hub locations, will also permit superior low cycle fatigue cracking resistance in each area and will contribute to long life components that will reduce repair costs.

The dual alloy turbine disc concept is desirable for both separately bladed disc designs and also integrally-bladed turbine stages as used in small aircraft engines, which are currently made from a single piece casting. These small gas turbine engines are presently used in executive and business jet turboprop applications but are also receiving consideration for replacement of the current reciprocating engines used in the general aviation market.

The dual property turbine disc concept has 2 major variations — the first involving the use of a single alloy processed differently in the hub and the rim areas. For example, some manufacturers overspeed disc sufficiently to cause plastic flow in the hub which pre-stresses the hub in compression, thus reducing its tensile stresses in normal service. The second major variation of the dual property turbine disc is the dual alloy turbine wheel which utilises two distinct alloys with dissimilar properties as required for the rim and the hub area, with an adequate and reliable process to join the dissimilar alloys. The dual alloy turbine wheel concept has been used in the 1950's in connection with military engines which utilised AISI Type 4340 alloy steel hubs fusion welded to Timken 16—25—6 warm-worked stainless steel rims. This particular combination was used because the alloys could be fusion-welded to yield joints of adequate strength and freedom from defects which performed well in service. The advent of stronger alloys, however, made the fusion-welding approach obsolete as the more complex alloys could not be fusion welded in typical disc thicknesses without cracking.

Dissimilar metals may also be welded by the inertia-welding process and this process has found use in the joining of axial-flow compressor discs into spools and in the joining of dissimilar metal shafts and turbine wheels. However, the inertia-welding process has an inherent size limitation in that the largest existing inertia-welding machines are only capable of welding joints in nickel-base alloys which are a few square inches in cross section. Hence, this limitation prevents the use of the process in all but the smallest turbine discs.

The bonding of dissimilar metals by hot isostatic pressing (HIP) has been suggested in respect to dual alloy turbine wheels since this process does not have the inherent joint size limitation of the inertia-welding process. Hot isostatic pressing is a process developed at Batelle in the United States of America, in which the pressure is applied equally in all directions multidirectionally through an inert argon gas in a certified pressure vessel, e.g. an autoclave. The principal limitations for HIP bonding presently are not completely defined, although the size of the available HIP autoclave may be a limitation in local areas where HIP autoclaves are not available.

The Ewing, et al Patent No. 4,152,816, discloses a method for manufacturing a turbine wheel from dissimilar metals by bonding two dissimilar alloy materials by hot isostatic pressure. The Ewing et al method utilizes a brazing alloy to seal the disc and rim prior to hot isostatic pressing. Any discontinuity of flaws in such brazing, however, will prevent a metallurgically sound bond between dissimilar disc and rim.

The Catlin Patent U.S. No. 3,940,268, also shows a method for bonding dissimilar alloy parts by hot isostatic pressing, or vacuum hot pressing and uses a fixture device to hold the separately manufactured blades in a powder-filled mould during the HIP processing.

It is an object of the present invention to use a relatively simple one-piece blade ring which can be metallurgically bonded to a hub of a dissimilar metal by hot isostatic pressing.

It is also an object of the present invention to preassemble the ring and the hub which are of dissimilar metals, in such a manner as to effect a positive seal for the interface between the two dissimilar metals.

Our present invention involves the improvement of a dual alloy turbine wheel manufacture whereby a bladed ring of high creep resistant material, such as MAR—M247, IN—100 or other large-grained superalloys, is integrally bonded to a hub of high tensile strength material such as Astroloy PM René 95, or other fine-grained alloys, by hot isostatic bonding (HIP).

In accordance with our invention, a blade ring having the blades either cast integrally with the ring or affixed to the ring by a prior art technique, is bonded by hot isostatic pressing to a hub member which is either forged, a pre-consolidated alloy powder metal or loose unconsolidated alloy powder metal of material such as René 95 or Astroloy PM.

In order to obtain a metallurgically sound weld or bond between the dissimilar metals, it is necessary to have the outer perimeter of the surfaces to be bonded, sealed during hot isostatic pressing in a HIP autoclave, so that the adjoining surfaces will be subject to the autoclave pressure and temperature to effect the desired bond. This sealing is accomplished by several means according to different prior art techniques, the only completely effective method being to "can" the entire assembly.

In accordance with our present invention, however, we have discovered a technique for bonding a dual alloy turbine wheel in which the (outer) blade ring is pre-assembled to the hub without canning the entire assembly, but yet which attains an effective seal to obtain a metallurgically sound bond in the HIP autoclave. In accordance with our invention, a hub member is inserted into a bore cavity machined in a blade ring and a plate is then electron-beam welded and subsequently brazed to the hub and the ring to seal the hub inside the blade ring cavity. Alternatively, a plate can be electron-beam welded and subsequently brazed to the hub/ring assembly at each end of the interface. After hot isostatic pressing to bond the hub to the blade ring, the plate means may be removed and the turbine wheel finish machined.

Our invention will be described herein in reference to several related embodiments of the invention, which are illustrated in the attached drawings, wherein.

FIGURE 1 is a cross-sectional view of a dual alloy axial wheel assembled for HIP bonding in accordance with our present invention;

FIGURE 2 is a cross-sectional view of a dual alloy radial-flow wheel assembled preparatory to HIP bonding in accordance with our present invention;

FIGURE 3 is a cross-sectional view of a dual alloy radial-flow wheel with a stub shaft hub, assembled preparatory to HIP bonding in accordance with our present invention;

FIGURE 4 is a photograph of a partial cross-section of a dual alloy axial turbine wheel HIP bonded in accordance with our present invention;

FIGURE 5 is a photograph of a partial cross-section of a radial-flow turbine wheel HIP bonded in accordance with our present invention;

FIGURE 6 is a photomacrograph at 2X of the HIP bonded dual alloy ring hub bond joint, shown in FIGURE 5;

FIGURE 7 is a photomicrograph at 400X of the dual alloy HIP bonded joint shown in FIGURES 5 and 6;

FIGURE 8 is a photomicrograph (at 100X) of the dual alloy HIP bonded axial wheel ring hub joint, shown in FIGURE 4; and

FIGURE 9 is a photomicrograph (at 400X) of the dual alloy HIP bonded axial wheel ring hub bond joint shown in FIGURES 8 and 4.

The dual alloy turbine disc concept may be applied both to separately bladed disc designs and integrally bladed turbine disc designs wherein the blades and the ring are made from a single member. The integrally bladed turbing stages are used most often in small gas turbine engines for executive and business jet turbo-prop applications. The blade and ring portion of the turbine wheel which requires a high stress-rupture strength, i.e. creep resistance, is most commonly cast from such nickel base superalloys as Inco 713LC and MAR—M247. The hub portion is most generally a wrought member, either forged or compacted from loose pre-alloyed powder or preconsolidated powder, of such alloys as Astroloy PM, René 95 and the like, the latter of which are both formed and bonded in the hot isostatic pressing process. Relative small metal movement will occur during HIP bonding with solid pieces, while loose powders will deform non-uniformly in complex configurations by 30 to 40%.

The development of powder metallurgical techniques, particularly the argon atomisation of nickel base superalloys into powders has led to the common use of powder metallurgical techniques for turbine hubs. According to this technology, a large powder atomiser consisting basically of a vacuum-induction melting furnace, is physically located on top of a large vertical tank. After melting of the alloy to the proper chemistry, the melting chamber is pressurised to atmospheric pressure with argon gas, an interlock valve is opened, and the molten metal poured from the induction furnace into an atomising unit. The stream of molten alloy is broken in the atomising unit into myriads of tiny droplets that solidify into powder particles and are collected in the bottom of the vertical tank. The powders are then screened, classified, and blended into a large master blend, the chemistry of which becomes the "master heat" chemistry of the powder. The consolidation of the powder after its manufacture is accomplished either by extrusion or by hot isostatic pressing, which may or may not be followed by forging.

The mechanism whereby hot isostatic processing consolidates loose metal powders, is basically that of pressing extremely clean surfaces together at pressures greatly in excess of the flow stress of the metals of the HIP temperature. The powders sequentially densify, bond, and plastically flow until consolidation occurs.

HIP bonding of nickel alloys may be accomplished by three techniques:

1. solid to solid
2. solid to powder
3. powder to powder

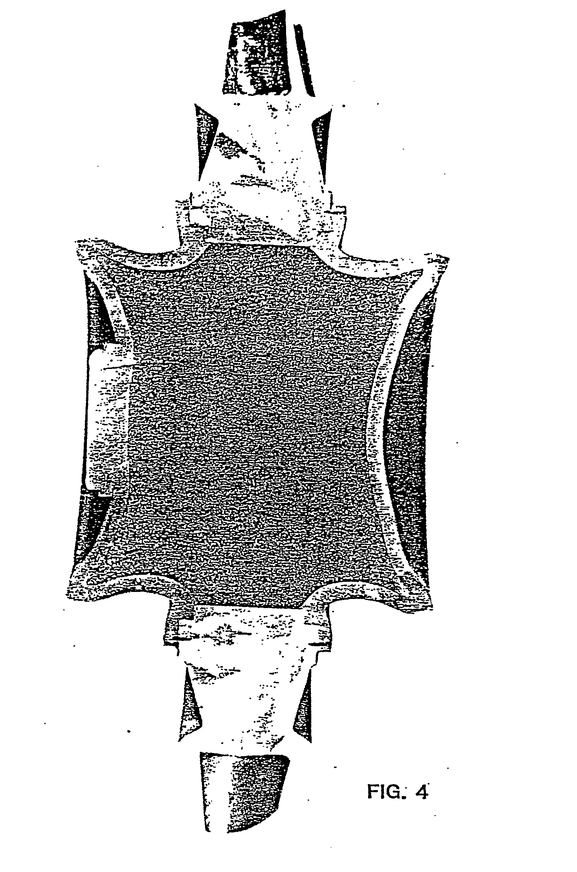

Techniques 1 and 2 are particularly useful in accordance with our present invention. The dual alloy radial turbine wheel shown in FIGURE 2 exemplifies a bond of a solid Astroloy hub forging to a solid Inco 713LC blade ring casting. The dual alloy axial turbine wheel shown in FIGURE 4 has a solid MAR—M247 cast ring bonded to a consolidated PM René 95 hub. Generally, it has been found that the same range of HIP parameters used to consolidate powders of the nickel base superalloys will also produce sound bonds. Typically, the appropriate HIP temperatures are 1180°C to 1230°C at 72.4 MN/m² for three to four hours.

The main processes for producing as-HIP shapes, involve the use of either metal or ceramic shaped containers. In general, the metal-can process is less expensive and complicated than the ceramic can process, although the latter has the advantage of producing more complex shapes. The greatest problem encountered with HIP consolidation of superalloy parts, has been the defects associated with can leakage during hot isostatic pressing. Such leakage results in a spongy, non-consolidated part.

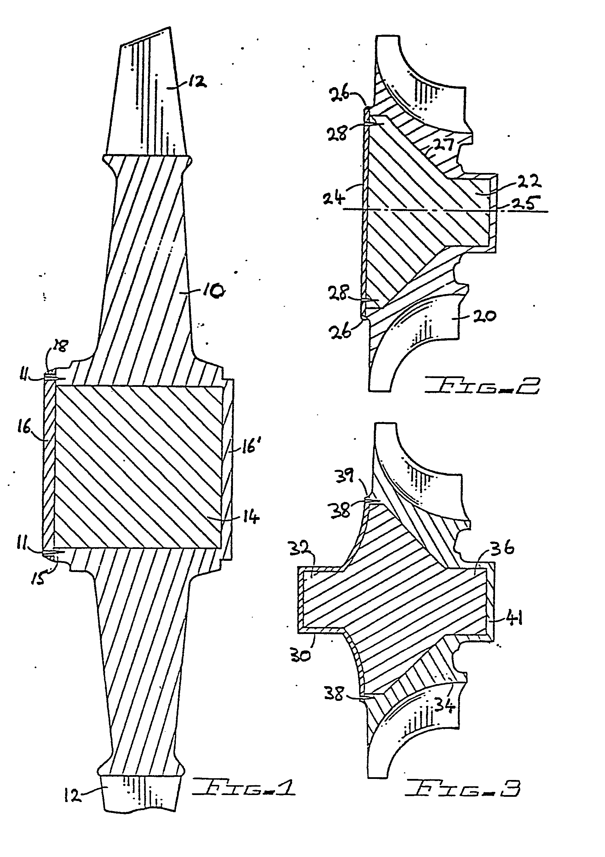

In reference to the drawings, FIGURE 1 shows a wheel arranged for HIP bonding in accordance with our present invention. Axial flow turbine ring 10 is a casting of IN—100 nickel base alloy with the blades 12 cast integrally with the ring 10. A hub preform 14 is machined from previously HIP densified logs (cylinders) and inserted into a cavity 13 machined in wheel 10. A plate 16 is then electron-beam welded to the ring 10, and electron beam weld spikes 11 affix the plate 16 to the ring hub assemblage, after which the outer circumference of the plate 16 is brazed to the lip area 15 of the ring, by activated diffusion bonding, to seal the preformed hub in the ring cavity. Activated diffusion bonding is described in the November 1970 Welding Research Supplement of the Welding Journal of the American Welding Society at pp 505—S to 509—S by George Hoppin, III and T. F. Berry. The hot isostatic pressing process then metallurgically bonds the outer surface area of the preformed hub 14 to the inner surface of ring 10 and the dual alloy wheel may then be finish machined to remove the plate 16 and finish the wheel to specification. An alloy plate 16' is similarly affixed to the opposite end of the ring bore 13 to seal the back side of the ring hub interface for bonding.

The soundness of the bonded joint shown in FIGURE 1 was determined by non-destructive inspection (NDI) and the joint efficiency confirmed by microstructural analysis and mechanical property testing. FIGURES 4—9 are actual photographs of HIP bonded dual alloy joints showing the integrity of dual alloy bonds preformed in accordance with our present invention.

FIGURE 2 shows the assembly arrangement used to bond a dual alloy radial wheel, with an integrally cast radial ring 20 machined to receive a radial hub preform 22 which may be either a forging, loose powder, or a pre-consolidated powder alloy hub. A sealing plate 24 of a compatible alloy, i.e. Inco 625 is first electron beam welded to the hub preform 22 and then brazed to the blade ring at 26, by activated diffusion bonding. The electron beam weld spikes are shown at 28 and the braze head at 26. A smaller alloy plate 25 is electron beam welded and ADB brazed to the small bore of the wheel ring 20 to seal the back side of the ring hub interface 27.

FIGURE 3 shows a dual alloy radial wheel assembled for HIP bonding with a shaped can 30 utilised to contain the stub shaft 32 of the backside of the wheel. The cast radial ring 34 is premachined to receive the hub preform 36 made of a preconsolidated Astroloy PM powder. The shaped can 30 seals the ring hub interface by electron beam welding to the blade ring 34 with the electron beam weld spikes 38 and then ADP brazing at 39. An alloy plate 41 is electron beam welded and ADB brazed to the other end of the radial ring bore to seal the other end of the ring hub interface.

The assemblies shown in FIGURES 1—5 were subjected to hot isostatic pressing in an industrial autoclave operated within the temperature and pressure parameters given above. The efficiency of the ring to hub bond joint was tested by NDI (non-destructive inspection), tensile testing at 24°C (75°F) and at 650°C (1200°F), stress rupture testing, LCF (low cycle fatigue) testing at 24°C (75°F) and 538°C (1000°F) fractography and microscopic examination. In respect to FIGURE 1, the hub preform was Astroloy, the cast ring IN 100 and the plates 16 and 16' Inconel 625.

FIGURE 4 is a photograph of a dual alloy wheel cross-sectioned after HIP processing, showing an axial turbine wheel which was pre-assembled for HIP bonding in accordance with the arrangement shown in FIGURE 1.

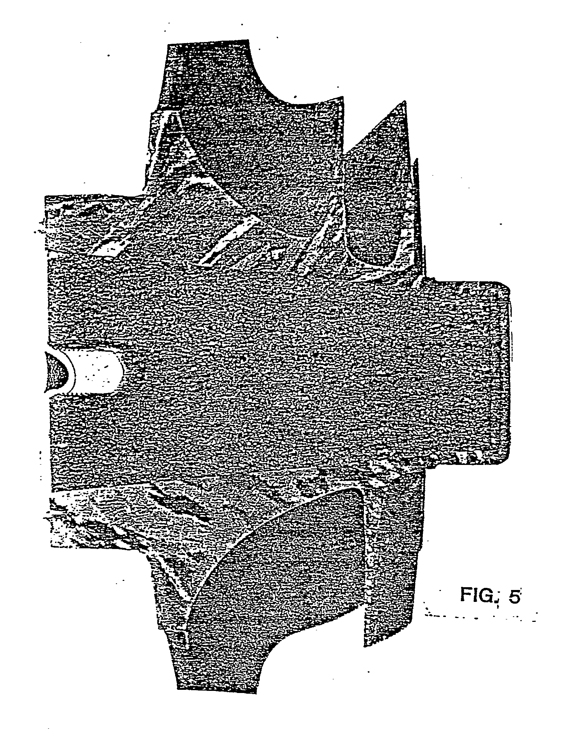

FIGURE 5 is a photograph of a dual alloy wheel cross-sectioned after HIP bonding, showing a dual alloy radial wheel which was pre-assembled as shown in FIGURE 2.

FIGURE 8 is a photomicrograph of the HIP bonded joint of the dual alloy axial turbine wheel shown in FIGURE 4, with the large grained ring shown at 52 in the figure being of cast MAR—M 247 and the HIP consolidated RENÉ 95 hub having finer grains, shown at 54 in the photograph.

FIGURE 9 shows the same joint as is shown in FIGURE 8 at higher magnification, i.e. 400X showing the diffusion across the bond joint 56. As can be seen from these photomicrographs, the HIP induced bond is metallurgically sound with evidence of diffusion through the bond interface.

FIGURE 6 is a photomacrograph of the HIP bonded joint of the dual alloy radial turbine wheel shown in FIGURE 5 with the larger grained radial wheel ring shown at 62 in the photograph of the bond interface 64 and the fine grained hub shown at 66 of the photomacrograph. The ring portion 62 of the bond shown in FIGURE 6 is INCO 713 LC alloy and the fine-grained hub portion 66 of the photo is forged Astroloy.

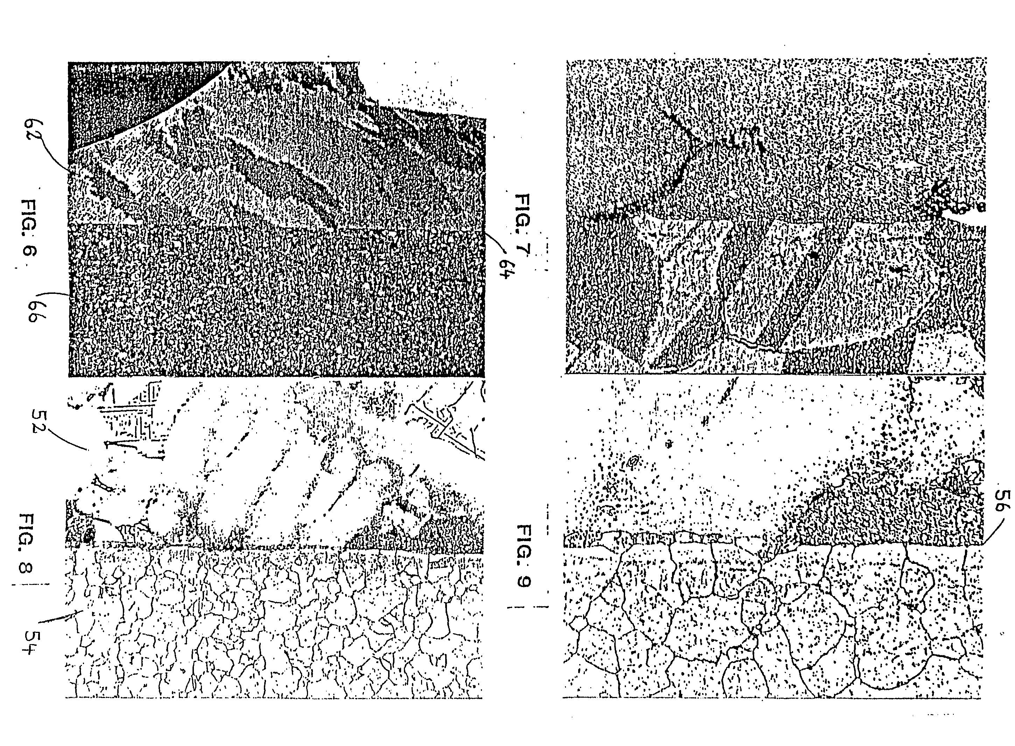

FIGURE 7 is a photomicrograph at 400X of the bond interface shown in FIGURE 6, further illustrating the metallurgical soundness of the dual alloy HIP bonded wheel.

Tensile bar test specimens were cut from the axial wheel shown in FIGURE 4 and the radial wheel shown in FIGURE 5 in such a manner that the bond interface lines were located in the gauge-length centers. These test bars were then subjected to tensile testings and in the test of specimens from both wheels, the tensile bars failed in the cast materials rather than at the bond line.

Stress-rupture test bars were also cut from the axial wheel and subjected to stress-rupture test and the test bar specimen from the axial wheel shown in FIGURE 4 failed in the RENÉ 95 hub portion after over 500 hours at 760°C and 85 KSI (586 MN/M$^2$) stress. The alloys employed in the turbine wheels to which our present invention is directed are known metallurgically as "superalloys", i.e. alloys capable of operating under stress at a temperature in excess of 538°C (1000°F). Many, but not all, of the superalloys are nickel base gamma-prime strengthened alloys. The ring portion which is most commonly integrally cast with the blades, is a castable alloy of high gamma-prime forming elements and having high creep rupture strength. MAR—M 247 is a preferred ring alloy which has shown excellent high temperature properties up to 982°C (1800°F) and may be used in the as-HIP plus heat treated form. Cast MAR—M 247 has good stress rupture strength for turbine blades and has been used for integral turbine wheels. The INCO alloys IN 713 LC, IN—100, IN—792 and IN—738 and MAR—M 200 are also alloys useful in connection with the integral cast ring component of our present invention.

The hub portion of the turbine wheel of the present invention is a wrought alloy, forged rolled extruded, extruded from alloy powder, either pre-consolidated prior to the HIP bonding or consolidated by the HIP bonding process. The preferred alloys for the hub have lower gamma-prime forming elements and develop higher tensile strength as required in the wheel hub. RENÉ 95 which is a well known nickel base alloy developed by General Electric Co., Astroloy PM which is a product of The Special Metals Company, IN 718, and Waspaloy are wrought alloys of the type which are suitable for the hub of our dual alloy wheel. PM RENÉ 95 is an ultra-high strength disc alloy, originally developed by General Electric Co., as a conventional forged alloy, but was later developed as a PM alloy. The chemical compositions of the various alloys discussed herein, are shown in Table I. The properties of these alloys are published in the technical literature, e.g. the widely distributed booklet "Nickel Base Alloys" 3rd Edition, July, 1977, published by The International Nickel Company, Inc.

A first-stage turbine wheel ring from a Garrett TPE331 turboprop engine, was cast from DS—MAR—M 247 alloy and HIP bonded to a PM RENÉ 95 hub in accordance with the method of our present invention and the HIP dual alloy wheel solution annealed at 1149°C (2100°F) for 2 hours, air cooled, and stabilised at 871°C (1600°F) for four hours and then aged for 12 hours at 649°C (1200°F), air cooled. Several mechanical test specimens were machined from the hub portion, the blade ring portion and across the bond joint and subjected to mechanical testing at room temperature 24°C (75°F), 649°C (1200°F) and 760°C (1400°F). The results of these tests are shown in Table II in respect to specimen 'A'. Three additional dual alloy wheels of the same alloys, were assembled and HIP bonded in an identical manner, however the as-HIP bonded dual alloy wheel was not solution annealed after HIP bonding. These latter three wheels were stabilised at 871°C (1600°F) for 8 hours, air cooled and then aged for 16 hours at 760°C (1400°F) air cooled. The results of these tests are shown in Table II as specimen 'B'.

As may be seen from the results in Table II in respect to the solution annealed specimens 'A', none of the bond joint specimens ruptured in the bond joint and the mechanical properties were equivalent to typical parent metal properties. It should be noted, however, that the 'B' specimens tended to fail either in or closely adjacent to the bond joints which tends to show the importance of solution annealing. The tensile and yield strength of the bond joints of the 'B' specimens were similar to the 'A' specimen results, however, the ductilities were lower.

The bond HIP joint requirement would be anticipated to be such that the joint could operate at 482°C (900°F) with a maximum combined stress of 60 KSI. It has been found from the above test that the hub tensile strength is at least 50% greater than cast monolithic MAR—M 247 and the weakest bond joint yield stress is twice as high as the operating stress in respect to the dual alloy wheel in which an integrally cast MAR—M 247, blade ring is bonded to a RENÉ 95 PM hub. The nature of both alloys is such that the stress rupture failures would never occur at 482°C (900°F) 60 KSI. The low tensile ductility of the bond joint would tend to reduce LCF (low cycle fatigue) life at higher stresses than 60 KSI but should not be a concern at the joint operating temperature and stress of 900°F/60 KSI (482°C/291 MN/m²).

While our invention has been described herein with reference to certain specific embodiments, it is to be understood that the scope of our invention should not be limited to such embodiments but rather should be afforded the full scope of the appended claims.

TABLE I

ALLOY CHEMICAL COMPOSITIONS (Weight Percent)

| Alloy Common Name | C | Cr | Ni | Co | Mo | W | Ta | Cb | Hf | Fe | Ti | Al | B | Zr | Other |
|---|---|---|---|---|---|---|---|---|---|---|---|---|---|---|---|
| **Ring (cast)** | | | | | | | | | | | | | | | |
| IN 713LC | 0.05 | 12.0 | 75 | — | 4.5 | — | — | 2.0 | — | — | 0.6 | 5.9 | 0.010 | 0.10 | — |
| IN 100 | 0.18 | 10.0 | 60 | 15.0 | 3.0 | — | — | — | — | — | 4.7 | 5.5 | 0.014 | 0.06 | 1.0V |
| IN 792 | 0.12 | 12.4 | 61 | 9.0 | 1.9 | 3.8 | 3.9 | — | — | — | 4.5 | 3.1 | 0.020 | 0.10 | — |
| IN 738 | 0.17 | 16.0 | 61 | 8.5 | 1.7 | 2.6 | 1.7 | 0.9 | — | — | 3.4 | 3.4 | 0.010 | 0.10 | — |
| MAR—M 247 | 0.16 | 8.2 | 60 | 10.0 | 0.6 | 10.0 | 3.0 | — | 1.5 | — | 1.0 | 5.5 | 0.020 | 0.09 | — |
| MAR—M 200 | 0.15 | 9.0 | 60 | 10.0 | — | 12.0 | — | 1.0 | — | — | 2.0 | 5.0 | 0.015 | 0.05 | — |
| **Hub (wrought)** | | | | | | | | | | | | | | | |
| IN 718 | 0.04 | 18.6 | Bal | — | 3.1 | — | — | 5.0 | — | 18.5 | 0.9 | 0.4 | — | — | — |
| Waspoloy | 0.08 | 19.5 | Bal | 13.5 | 4.3 | — | — | — | — | — | 3.0 | 1.3 | 0.006 | 0.06 | — |
| Rene 95 | 0.06 | 13.0 | Bal | 8.0 | 3.5 | 3.5 | — | 3.5 | — | — | 3.5 | 2.5 | 0.010 | 0.05 | — |
| Astroloy | 0.08 | 15.0 | Bal | 15.0 | 5.3 | — | — | — | — | — | 3.5 | 4.4 | 0.030 | — | — |

0 042 744

TABLE II

MECHANICAL PROPERTIES OF MAR M247/RENE 95 PM DUAL ALLOY WHEELS

| TEMP (°F) | LOCATION | Specimens | .2% ys ksi (MN/m$^2$) | UTS ksi (MN/m$^2$) | e (%) | RA (%) |
|---|---|---|---|---|---|---|
| 75 (24°C) | BOND JOINT | A | 116.2 (801.1) 109.9 (757.7) — | 125.0 (930.7) 116.5 (803.1) 124.8 (860.4) | 7.2 7.8 5.1 | 21.4 23.5 16.0 |
| | | B | 118.9 (819.7) 116.2 (801.1) | 126.3 (870.7) 116.6 (827.8) | 2.2 4.9 | 6.4 9.0 |
| | RENE 95 PM | A (J) | 163.8 (1129) 163.1 (1124.4) | 220.8 (1522.2) 220.3 (1519) | 10.2 12.1 | 20.2 20.5 |
| | | B (J) | 136.5 (661.6) 138.3 (670.3) | 200.7 (1384) 204.7 (1411) | 14.4 14.6 | 18.5 20.4 |
| | MAR—M—247 TYP RENE 95 PM TYP | (Handbook Data) | 118 (813.5) 140 (965.2) | 140 (965.1) 205 (1413) | 7 14 | — 20 |
| 1200 (1149°C) | BOND JOINT | A (J) | 103.9 (716.3) 99.2 (683.9) | 107.0 (737.6) 105.4 (726.6) | 4.8 8.7 | 10.9 17.4 |
| | | B (J) | 117.1 (807.3) 114.2 (787.3) | 121.9 (840.4) 118.4 (816.2) | 1.3 0.9 | 2.7 3.0 |
| | RENE 95 PM | A (J) | 142.5 (982.4) 139.3 (960.3) | 204.8 (1412) 207.1 (1428) | 10.4 11.8 | 17.2 20.6 |
| | | B | 121.4 (836.9) 123.0 (848.0) | 186.5 (1286) 187.5 (1293) | 32.3 25.6 | 27.4 26.3 |
| | MAR M 247 TYP RENE 95 PM TYP | (Handbook Data) | 120 (827.3) 150 (1034) | 150 (1034) 205 (1413) | — 21 | — 21 |

TABLE II (Continued)

| TEMP (°F) | LOCATION | Specimens | .2% ys ksi $(MN/m^2)$ | UTS ksi $(MN/m^2)$ | e (%) | RA (%) |
|---|---|---|---|---|---|---|
| 1400 (760°C) | BOND JOINT | B (J) | — <br> — | 92.6 (638.4) <br> 95.7 (659.8) | 0.9 <br> 0.6 | 2.9 <br> 2.7 |
| | RENE 95 PM | B (J) | 118.2 (814.5) <br> 118.7 (818.3) | 151.8 (1046.5) <br> 152.4 (1051) | 28.7 <br> 30.0 | 26.9 <br> 25.8 |
| | MAR M 247 TYP <br> RENE 95 PM TYP | (Handbook <br> Data) | 120 (827.3) <br> 130 (896.2) | 150 (1034) <br> 155 (1068) | — <br> 7 | — <br> 8 |

HEAT TREATMENT

|  | | A | | B |
|---|---|---|---|---|
| Solution Anneal | 1149°C | (2100°F) × 2 hr, | RAC | None |
| Stabilise | 871°C | (1600°F) × 4 hr, | AC | 871°C (1600°F) × 8 hr, AC |
| Age | 649°C | (1200°F) × 12 hr, | AC | 760°F (1400°F) × 16 hr, AC |

## Claims

1. A method for manufacturing a dual alloy turbine wheel having an integral blade ring (10, 12, 20, 34) of one super alloy material of high creep rupture strength at elevated temperatures, (e.g. up to about 982°C), and a wrought hub of a different super alloy material of high tensile strength and resistance to low cycle fatigue at tensile strength of the order of 105 MKg/m², which comprises preforming the blade ring and the hub with the internal diameter (ID) of the ring shaped to receive the outer circumferential surface of the hub in near full surface area contact at the ring/hub surface interface (27), and assembling the blade ring with the hub, further comprising the steps of: (a) applying relatively thin-section temperature-resistant plate means (16, 16', or 24, 25 or 30, 41) to the ring/hub assembly, to overlie and cover the exposed edge portions of the said ring/hub interface and affixing the said plate means to the ring/hub assembly by electron beam welding; (b) thereafter sealing the ring/hub interface by applying a continuous braze bead between the plate means and the blade ring by activated diffusion bonding; and (c) subjecting the sealed ring/hub assembly to hot-isostatic pressing to effect bonding of the ring to the hub.

2. A method as claimed in Claim 1 in which the plate means comprise a pair of plates one at each end of the ring/hub interface.

3. A method as claimed in Claim 1 in which the hub is assembled in a cavity (13) in the blade ring and the plate means comprise a single plate (16) closing the cavity with the hub assembled in it.

4. A method as claimed in any of the preceding claims in which after the ring has been bonded to the hub, the plate means are removed.

5. The method of any preceding claim wherein said hot isostatic pressing is conducted in an autoclave maintained at from 1121°C to 1232°C under about 72 MN/m² pressure for 3 to 4 hours.

6. The method of any preceding claim wherein said hot isostatically pressed dual alloy turbine wheel is solution annealed, thermally stabilised and thermally aged.

7. The method of any preceding claim wherein said hub and ring alloys are nickel base gamma prime strengthened alloys.

8. The method of Claim 7 wherein said ring is a cast nickel base superalloy containing a relatively high proportion of gamma-prime forming elements and said hub is a wrought nickel base superalloy of a lower proportion of gamma prime forming elements.

9. The method of any preceding claim wherein said hub member is preformed by forging.

10. The method of any of Claims 1—8 wherein said hub member is formed of a loose unconsolidated alloy powder, which is consolidated by said hot isostatic pressing treatment.

## Patentansprüche

1. Verfahren zum Herstellen eines aus zwei Legierungen bestehenden Turbinenrades mit einem integralen Blattring (10, 12, 20, 34) aus einem Superlegierungsmaterial mit hoher Kriechdehnungs-Bruchfestigkeit bei erhöhten Temperaturen (z.B. bis zu etwa 982°C), und mit einer geschmiedeten Nabe aus einem anderen Superlegierungsmaterial hoher Zugfestigkeit und Resistenz gegenüber niedrigzyklischen Ermüdungen bei Zugfestigkeiten in der Größenordnung von 105 MKg/m², bei dem der Blattring und die Nabe mit dem Innendurchmesser (ID) des Ringes so geformt sind, daß die äußere Umfangsfläche der Nabe in nahezu vollständigen Oberflächenkontakt an der Grenzfläche (27) zwischen Ring und Nabe steht, und der Blattring mit der Nabe zusammengebaut wird, und das ferner folgende Schritte umfaßt:

a) es wird eine temperaturfeste Plattenanordnung (16, 16' oder 24, 25 oder 30, 41) mit relativ dünnem Querschnitt auf die Ring/Nabenanordnung so aufgebracht, daß sie über den freiliegenden Randteilen der Ring/Naben-Grenzfläche liegt und diese überdeckt, und es wird die Plattenanordnung mit der Ring/Nabenanordnung durch Elektronenstrahlschweißung befestigt,

b) im Anschluß daran wird die Ring/Naben-Grenzfläche dadurch abgedichtet, daß eine kontinuierliche Versteifungswulst zwischen der Plattenanordnung und dem Blattring durch aktivierte Diffusionsverbindung aufgebracht wird, und

c) es wird die abgedichtete Ring/Nabenanordnung einem heißen isostatischen Druckvorgang ausgesetzt, um eine Verbindung des Ringes mit der Nabe zu erzielen.

2. Verfahren nach Anspruch 1, dadurch gekennzeichnet, daß die Plattenanordnung aus einem Plattenpaar besteht, und daß an jedem Ende der Ring/Naben-Grenzfläche eine Platte vorgesehen wird.

3. Verfahren nach Anspruch 1, dadurch gekennzeichnet, daß die Nabe in einem Hohlraum (13) im Blattring zusammengebaut wird, und daß die Plattenanordnung eine einzige Platte (16) aufweist, die den Hohlraum mit der in ihr zusammengebauten Nabe verschließt.

4. Verfahren nach einem der Ansprüche 1—3, dadurch gekennzeichnet, daß die Plattenanordnung entfernt wird, wenn der Ring mit der Nabe verbunden worden ist.

5. Verfahren nach einem der Ansprüche 1—4, dadurch gekennzeichnet, daß der heiße isostatische Druckvorgang in einem Autoklaven durchgeführt wird, der unter einem Druck von etwa 72 MN/m² und auf einer Temperatur zwischen 1121°C und 1232°C drei bis vier Stunden lang gehalten wird.

6. Verfahren nach einem der Ansprüche 1—5, dadurch gekennzeichnet, daß das heiße isostatisch gepreßte, aus zwei Legierungen hergestellte Turbinenrad in Lösung getempert, thermisch stabilisiert und thermisch gealtert wird.

7. Verfahren nach einem der Ansprüche 1—6, dadurch gekennzeichnet, daß die Legierungen für Nabe und Ring Legierungen auf Nickelbasis sind, die durch Gammabehandlung verfestigt sind.

8. Verfahren nach Anspruch 7, dadurch gekennzeichnet, daß der Ring eine Superlegierung auf Nickelgußbasis ist, die einen verhältnismäßig hohen Anteil an eine Gammabehandlung darstellenden Elementen enthält, und daß die Nabe eine geschmiedete Nickelbasis-Superlegierung mit einem niedrigeren Anteil an durch Gammabehandlung darstellenden Elementen ist.

9. Verfahren nach einem der Ansprüche 1—8, dadurch gekennzeichnet, daß das Nabenbauteil durch Schmieden vorgeformt wird.

10. Verfahren nach einem der Ansprüche 1—8, dadurch gekennzeichnet, daß das Nabenbauteil aus einem losen, nichtkonsolidierten Legierungspulver hergestellt wird, das durch die heiße isostatische Druckbehandlung konsolidiert ist.

**Revendications**

1. Procédé de fabrication d'une roue de turbine en deux alliages, composée d'un anneau à aubes monobloc (10, 12, 20, 34) en un super-alliage de haute résistance à la rupture par fluage aux températures élevées, (par exemple jusqu'à 982°C environ), et d'un moyeu forgé en un super-alliage différent, de haute résistance à la traction et de haute résistance à la fatigue à basse période à une résistance à la traction de l'ordre de 1050MN/m², qui comprend le préformage de l'anneau à aubes et du moyeu de sorte que la surface intérieure de l'anneau puisse recevoir la surface circonférentielle extérieure du moyeu en contact sensiblement sur toute la surface, à l'interface anneau/moyeu (27), et l'assemblage de l'anneau à aubes avec le moyeu, ce procédé comprenant en outre les opérations suivantes: (a) application de moyens tels qu'une plaque (16, 16', ou 24, 25 ou 30, 41) résistant à la température et de section relativement mince, à l'ensemble anneau/moyeu, de manière à embrasser et à recouvrir les bords exposé de l'interface anneau/moyeu, et fixation de ces moyens à l'ensemble anneau/moyeu, par soudage au faisceau d'électrons; (b) ensuite, fermeture étanche de l'interface anneau/moyeu, par application d'un cordon continu de brasure entre les moyens tels qu'une plaque et l'anneau à aubes, au moyen d'une liaison à diffusion activée; et (c) soumission de l'ensemble anneau/moyeu, ainsi fermé, à un pressage isotatique à chaud, pour effectuer la jonction de l'anneau au moyeu.

2. Procédé suivant la revendication 1, dans lequel les moyens précités comprennent deux plaques, une à chaque extrémité de l'interface anneau/moyeu.

3. Procédé suivant la revendication 1, dans lequel le moyeu est assemblé dans une cavité (13) de l'anneau à aubes et les moyens précités comprennent une seule plaque (16) fermant la cavité, avec le moyeu assemblé dans celle-ci.

4. Procédé suivant l'une quelconque des revendications précédentes, dans lequel, après jonction de l'anneau au moyeu, les moyens tels que des plaques sont enlevés.

5. Procédé suivant l'une quelconque des revendications précédentes, dans lequel le pressage isostatique à chaud est effectué dans un autoclave maintenu entre 1121°C et 1232°C, sous une pression de l'ordre de 72 MN/m² pendant 3 à 4 heures.

6. Procédé suivant l'une quelconque des revendications précédentes, dans lequel la roue de turbine en deux alliages, pressée isostatiquement à chaud, est recuite en solution, stabilisée thermiquement et vieillie thermiquement.

7. Procédé suivant l'une quelconque des revendications précédentes, dans lequel les alliages du moyeu et de l'anneau sont des alliages renforcés en gamma-prime à base de nickel.

8. Procédé suivant la revendication 7, dans lequel l'anneau est un super-alliage coulé à base de nickel contenant une proportion relativement grande d'éléments de formation de gamma-prime, et le moyeu est un super-alliage forgé à base de nickel contenant une proportion plus faible d'éléments de formation de gamma-prime.

9. Procédé suivant l'une quelconque des revendications précédentes, dans lequel l'élément de moyeu est préformé par forgeage.

10. Procédé suivant l'une quelconque des revendications 1 à 8, dans lequel l'élément de moyeu est constitué d'une poudre d'alliage libre, non consolidée, qui est consolidée par le traitement de pressage isostatique à chaud.

FIG-1

FIG-2

FIG-3

FIG. 4

FIG. 5

0 042 744

FIG. 7

FIG. 9

FIG. 6

FIG. 8

4